# EUROPEAN PATENT SPECIFICATION

(11) **EP 1 565 417 B1**
(45) Date of publication and mention of the grant of the patent: **02.08.2006**
(21) Application number: 02787848.7
(22) Date of filing: 27.11.2002
(51) Int. Cl.: C04B 41/90, C22C 1/10

(54) **METHOD FOR PRODUCING A REFRACTORY COMPOSITE MATERIAL**
VERFAHREN ZUR HERSTELLUNG EINES FEUERFESTEN VERBUNDWERKSTOFFS
PROCEDE DE PRODUCTION D'UN MATERIAU COMPOSITE REFRACTAIRE

(43) Date of publication of application: 24.08.2005
(73) Proprietor: FOC Holding Establishment, 9490 Vaduz (LI)
(72) Inventor: GORDEEV, Sergei Konstantinovich, 198332 Saint Petersburg (RU); DENISOV, Leonid Yurevich, 194358 Saint Petersburg (RU)
(74) Representative: Hyltner, Jan-Olof
(86) International application number: PCT/EP2002/013364
(87) International publication number: WO 2004/048294

(56) References cited:
- EP-A- 0 378 503
- US-A- 3 725 015
- US-A- 5 377 741

## Description

The invention relates to producing refractory composite materials, practically poreless, and can be used for production of composite articles with increased size stability, wear resistance, high specific physico-mechanical properties and hardness, production of wear-resistant inserts in components and materials for tribo-technical purposes as well.

A method for producing of refractory material is known, which consists of the following steps [1]: mixing of a pulverized refractory boride and/or a carbide with a carbon-containing substance; molding of article of predetermined shape from the mixture; heating of the prepared work-piece to extract carbon from the carbon-containing substance; introducing into the work-piece of a melted metal mixture comprising 75-99 %vol of at least one metal selected from the group containing Si, Cr, Fe, Ni, Ti and 1-25 %vol of a metal or mixture of metals from the group of Al, Cu, Fe and 0-24 %vol of the metal contained in the initial refractory material. The known method is quite complicated for realisation, as complicated equipment is necessary for precise dosing of molding, mixture components and melts used for infiltration of work-pieces and keeping of high temperatures. Because of significant shrinkage during sintering a closed porosity in the work-piece can be formed, thus resulting in deterioration of the subsequent metal infiltration into the porous work-piece.

Another method is also known for producing of refractory carbide-based composite articles of predetermined shapes [2]. According to the method a porous work-piece is molded with porosity 20-60 %vol from a pulverised carbide-forming metal, then it is heat-treated in a medium of gaseous hydrocarbon or a mixture of hydrocarbons at a temperature exceeding their decomposition temperature till an increase of the work-piece mass by at least 3 %, after which the prepared intermediate body is infiltrated by a melt of metal from the following group of metals: Ag, Au, Cu, Ga, Ti, Ni, Fe, Co, or an alloy based on a metal from this group.

As carbide-forming metal at least one metal from groups IV, V or VI of the Periodic Table, for example Ti, Zr, Hf, V, Nb, Ta, Cr, Mo, W is used, while the heat-treatment is carried out in a medium of at least one hydrocarbon from the group including acetylene, methane, ethane, propane, pentane, hexane, benzene and their derivatives. As a hydrocarbon mixture for the heat treatment natural gas at temperature 750-950°C is used, for example.

Scope of properties of products prepared by the known method allows to apply them as refractory engineering materials, erosion-resistant electrodes for plasmatrons, high-current erosion-resistant electrical contacts, arc-extinguishing elements, high-temperature thermal accumulators, ablation heat-protective materials, damping refractory materials.

However, the known method is limited by a group of metals, which due to their physical properties can be introduced in composites, and in a series of cases it is necessary to prepare and use composite materials with metals in teir composition, the properties of which make impossible to use the known method.

The object of the present invention is to develop a high-efficiency method providing an expansion of the range of metals possible to use as metallic phase of the composite; to prepare composite materials with high physico-mechanical characteristics, high hardness and wear resistance as well as workability at elevated temperatures, making it possible to change the above-mentioned properties by varying the ratio of components in composition both of the composite material and its metallic phase.

The essence of the invention is a method consisting of steps of infiltration of porous carbide work-piece with a metal, additional heat treatment in a melt of another metal at a temperature exceeding the melting point of the metal in intermediate body.

In particular, as the porous carbide work-piece it is possible to use a work-piece prepared by molding of carbide powders (for example TiC, B₄C, etc.) and its subsequent sintering. Another variant is a porous work-piece formed of powders from carbide-forming elements or their mixtures with carbide powders with its subsequent treatment in a medium of hydrocarbons at a temperature exceeding their decomposition temperature followed by a treatment at a temperature of 1200-1800°C. The work-piece volume porosity can be either uniform, i.e. porosity in different parts of the work-piece is equal, or non-uniform, i.e. porosity in different parts of the work-piece is unequal, for example, if there is a porosity gradient in one or several directions.

As a precursor in the method not only the stated types of porous carbide work-pieces can be used but also work-pieces prepared by other methods. The condition for a porous carbide work-piece is its porosity to be in the range of 30-60 % vol. The major part of pores should be open in this case. Using of work-pieces of porosity beyond this range is not expedient as it results in deterioration of the properties of composite materials (at high porosity) or complicates the production process of the intermediate body (at low porosity).

The porous work-piece is infiltrated by a melt of metal or its alloy resulting in preparation of an intermediate body. The infiltration is carried out in inert medium by dipping of the work-piece in a melt or by melting of a weighed sample of metal or alloy on surface of the work-piece.

Further, the prepared intermediate body is additionally treated in a melt of another metal, the temperature of which is higher than the melting point of the metal phase of the intermediate body. It is more preferable to use such metals, which do not strongly (chemically) interact with the carbide phase of the material (thus, the carbide skeleton is kept during the production process, and, hence the strength of the prepared material) and also able to form a common liquid phase with the metal of the intermediate body in melts.

For acceleration of the process in a series of cases before the treatment in a melt the intermediate body is heated up to a temperature exceeding the melting point of the metal phase of the intermediate body.

The composite material prepared by the claimed method represents a two-phase system formed by a continuous three-dimensional skeleton of refractory carbide phase with pores filled by metal phase. In this case metal phase is a mixture of metals, namely initial one and a metal from the melt. Depending on the treatment conditions in a melt (temperature of melt, treatment time, fluidity of melt, etc) the metal from the melt can be distributed either uniformly or non-uniformly throughout the volume of the composite material.

The essence of the present invention is in that the intermediate body comprising a carbide skeleton and a metal is treated in a melt of another metal at a temperature exceeding the melting point of the metal in the intermediate body. In this case, the metal in pores of the carbide skeleton is in a liquid state. During the interaction with the melt of another metal a process of mutual diffusion of the metal from the intermediate body into the melt takes place and in a reverse direction - from the melt into the intermediate body. This results in replacing of the metal in composition of the intermediate body by the metal from the melt and the degree of replacement by the new metal may reach 80 % by volume of the metallic phase of the composite material and greater. It should be noted that it is not a decisive importance in this invention whether the metal from the melt infiltrates the carbide skeleton or not at the temperature of treatment in the melt. The metal, by which the intermediate body was infiltrated, provides a reliable adhesion bonding in the interface of carbide and metal phases in a ready-made material.

In case of a non-uniform distribution of metal from the melt in the composite material volume, for example, if there is a replacing metal on surface and is absent inside the composite material, this offers possibilities of production of articles with a gradient by composition. The latter provides the articles with a complex of unique properties, for example, high strength and rigidity of the composite as a whole and anti-friction properties due to the near-surface zone enriched by another metal.

The conditions for producing of a refractory composite material are different in each case and depend on the choice of:
- initial porous work-piece,
- metal or alloy for infiltration of porous work-piece and producing of intermediate
- body,
- metal of melt for treatment of intermediate body,
- application of article.

Essence of the invention is disclosed in the following examples.

*Example 1*. The initial porous work-pieces are shaped as discs of sizes Ø20x5 mm. The preparation process of the work-pieces is as follows. A mixture of powders of amorphous boron (69%wt) and boron carbide (29 %wt) with addition of temporary bond (phenol-formaldehyde resin SF 10-A - 2% wt) are molded to form discs of sizes Ø20x5 mm. Further they are placed in an isothermal reactor for pyrocarbon synthesis and are heat-treated at temperature of 870°C in a medium of natural gas until the mass is increased by 19 %. The treated discs are placed in a vacuum furnace and are heated up to temperature 1620°C and are kept there at this temperature during 20 min. The prepared work-pieces have porosity of 50 % vol, which is equally distributed throughout the volume. The work-pieces are infiltrated at temperature 1200-1250°C in the vacuum furnace by melting of weighed samples of aluminium of technical purity mark A7 (A1≥99,7 %) on surface of the work-pieces. Further the intermediate bodies B₄C/Al are heated up to 700°C and are immersed in Zn melt heated up to 750°C and are kept there for 2 hours. As a result the samples containing 50 % vol of boron carbide and 50 % vol of the alloy (Al-Zn) are produced. The metallic phase contains 54 % vol of aluminium and 46 % vol of zinc. The material has the following properties: density - 3.57 g/cm³; hardness - HRA 57.

*Example* 2. The initial porous work-pieces are shaped as discs of sizes Ø20x5 mm. The preparation process of the work-pieces is a follows. A mixture of powders of titanium (49 % wt) and titanium carbide (49 % wt) with addition of temporary bond (phenol-formaldehyde resin SF 10-A - 2 % wt) are molded to form discs of sizes Ø20x5 mm. Further they are placed in an isothermal reactor for pyrocarbon synthesis and are heat-treated at temperature of 870°C in a medium of natural gas until the mass is increased by 12.5 %. The treated discs are placed in a vacuum furnace and are heated up to temperature 1700°C and are kept there at this temperature during 20 min. The prepared work-pieces have porosity of 40 % vol, which is equally distributed through the volume. The work-pieces are infiltrated at temperature 1150-1200°C in the vacuum furnace by melting of weighed samples of aluminium of technical purity mark A7 (A1≥99.7 %) on surface of the work-pieces. Further the intermediate bodies TiC/A7 are heated up to 700°C and are immersed in Mg melt heated up to 750°C and are kept there for 4 hours. As a result samples containing 60 % vol of titanium carbide and 40 % vol of the alloy (Mg-Al) are produced. The metallic phase contains 78 % vol of magnesium and 22 % vol of aluminium. The material has the following proerties: density - 3.63 g/cm³; bending strength - 425 Mpa.

Properties of the material were determined using the methods listed below:
1. Density was determined by hydrostatic method
2. Hardness by Rockwell method
3. Bending strength - by three-point bending method.

## Claims

1. A method for producing a refractory composite material including the steps of infiltration of a porous carbide work-piece by a metal resulting in preparation of an intermediate body, **characterized in that** the intermediate body is additionally treated in a melt of another metal at temperature exceeding the melting point of the metallic phase of the intermediate body.

2. A method according to claim 1, **characterized in that** the intermediate body is treated in a melt so that the metal from the melt is uniformly distributed in the refractory composite material.

3. A method according to claim 1, **characterized in that** the intermediate body is treated in a melt so that the metal from the melt is nonuniformly distributed in the refractory composite material.

4. A method according to any of claims 1-3, **characterized in that** as said porous carbide work-piece a work-piece is used prepared by pressing and sintering from carbide powders.

5. A method according to any of claims 1-3, **characterized in that** a porous carbide work-piece is produced by pressing of powders of carbide forming elements or their mixtures, with subsequent treatment in a medium of hydrocarbons at a temperature exceeding their decomposition temperature and heat treatment at temperature 1200-1800°C.

6. A method according to any of claims 1-5, **characterized in that** a porous work-piece is used with porosity 30-60 % vol.

7. A method according to any of claims 1-6, **characterized in that** a porous work-piece is used with a porosity uniformly distributed in volume

8. A method according to any of claims 1-6, **characterized in that** a porous carbide work-piece is used with a porosity non-uniformly distributed in volume.

9. A method according to any of claims 1-8, **characterized in that** said porous carbide work-piece is infiltrated by dipping in a melt of metal or melting of a weighed sample of metal on its surface.

10. A method according to any of claims 1-9, **characterized in that** before treatment the intermediate body is heated up to a temperature exceeding the melting point of a metal phase of the intermediate body.

## Patentansprüche

1. Verfahren zur Herstellung eines feuerfesten Verbundmaterials, beinhaltend die Schritte der Infiltration eines porösen Carbidwerkstücks durch ein Metall, was zur Herstellung eines Zwischenkörpers führt, **dadurch gekennzeichnet, dass** der Zwischenkörper zusätzlich in einer Schmelze eines anderen Metalls bei einer Temperatur oberhalb des Schmelzpunkts der Metallphase des Zwischenkörpers behandelt wird.

2. Verfahren gemäss Anspruch 1, **dadurch gekennzeichnet, dass** der Zwischenkörper in einer Schmelze behandelt wird, so dass das Metall der Schmelze einheitlich in dem feuerfesten Verbundmaterial verteilt wird.

3. Verfahren gemäss Anspruch 1, **dadurch gekennzeichnet, dass** der Zwischenkörper in einer Schmelze behandelt wird, so dass das Metall der Schmelze nicht einheitlich in dem feuerfesten Verbundmaterial verteilt wird.

4. Verfahren gemäss einem der Ansprüche 1 bis 3, **dadurch gekennzeichnet, dass** als das poröse Carbidwerkstück ein Werkstück verwendet wird, das durch Verpressen und Sintern aus Carbidpulvern hergestellt wird.

5. Verfahren gemäss einem der Ansprüche 1 bis 3, **dadurch gekennzeichnet, dass** ein poröses Carbidwerkstück durch Verpressen von Pulvern von carbidbildenden Elementen oder ihren Mischungen hergestellt wird, mit darauffolgender Behandlung in einem Medium von Kohlenwasserstoffen bei einer Temperatur oberhalb ihrer Abbautemperatur, und Wärmebehandlung bei einer Temperatur von 1.200 bis 1.800°C.

6. Verfahren gemäss einem der Ansprüche 1 bis 5, **dadurch gekennzeichnet, dass** ein poröses Werkstück verwendet wird, das eine Porosität von 30 bis 60 Vol.% aufweist.

7. Verfahren gemäss einem der Ansprüche 1 bis 6, **dadurch gekennzeichnet, dass** ein poröses Werkstück verwendet wird, wobei die Porosität einheitlich im Volumen verteilt ist.

8. Verfahren gemäss einem der Ansprüche 1 bis 6, **dadurch gekennzeichnet, dass** ein poröses Werkstück verwendet wird, wobei die Porosität nicht einheitlich im Volumen verteilt ist.

9. Verfahren gemäss einem der Ansprüche 1 bis 8, **dadurch gekennzeichnet, dass** das poröse Carbidwerkstück durch Eintauchen in eine Schmelze eines Metalls oder Schmelzen einer abgewogenen Probe von Metall auf seiner Oberfläche infiltriert wird.

10. Verfahren gemäss einem der Ansprüche 1 bis 9, **dadurch gekennzeichnet, dass** der Zwischenkörper vor der Behandlung auf eine Temperatur oberhalb des Schmelzpunkts einer Metallphase des Zwischenkörpers erwärmt wird.

## Revendications

1. Un procédé de production d'un matériau composite réfractaire comprenant les étapes d'infiltration d'une pièce à travailler en carbure poreux par un métal, résultant en la formation d'un corps intermédiaire, **caractérisé en ce que** le corps intermédiaire est traité en supplément dans une coulée d'un autre métal à une température qui excède le point de fusion de la phase métallique du corps intermédiaire.

2. Un procédé selon la revendication 1, **caractérisé en ce que** le corps intermédiaire est traité dans une coulée de façon à ce que le métal provenant de la coulée soit distribué uniformément dans le matériau composite réfractaire.

3. Un procédé selon la revendication 1, **caractérisé en ce que** le corps intermédiaire est traité dans une coulée de façon à ce que le métal provenant de la coulée soit distribué non uniformément dans le matériau composite réfractaire.

4. Un procédé selon l'une quelconque des revendications 1-3, **caractérisé en ce que** pour ladite pièce à travailler en carbure poreux, on utilise une pièce à travailler préparée par compression et frittage de poudres de carbure.

5. Un procédé selon l'une quelconque des revendications 1-3, **caractérisé en ce qu'**une pièce à travailler en carbure poreux est produite par compression de poudres d'éléments formant le carbure ou de leurs mélanges, par traitement subséquent dans un médium d'hydrocarbures à une température excédant leur température de décomposition et par traitement thermique à une température entre 1200-1800°C.

6. Un procédé selon l'une quelconque des revendications 1-5, **caractérisé en ce qu'**on utilise une pièce à travailler poreuse avec une porosité de 30-60 % en volume.

7. Un procédé selon l'une quelconque des revendications 1-6, **caractérisé en ce qu'**on utilise une pièce à travailler poreuse avec une porosité distribuée uniformément en volume.

8. Un procédé selon l'une quelconque des revendications 1-6, **caractérisé en ce qu'**on utilise une pièce à travailler en carbure poreux avec une porosité distribuée non uniformément en volume.

9. Un procédé selon l'une quelconque des revendications 1-8, **caractérisé en ce que** ladite pièce à travailler en carbure poreux est infiltrée par trempage dans une coulée de métal ou par fusion d'un échantillon pondéré de métal sur sa surface.

10. Un procédé selon l'une quelconque des revendications 1-9, **caractérisé en ce qu'**avant le traitement, le corps intermédiaire est chauffé jusqu'à une température excédant le point de fusion d'une phase métallique du corps intermédiaire.
